# EUROPEAN PATENT APPLICATION

(11) **EP 0 873 001 A2**
(43) Date of publication of application: **21.10.1998**
(21) Application number: 98106167.4
(22) Date of filing: 03.04.1998
(51) Int. Cl.: H04N 1/00

(54) **User interface for a reprographic system for indicating non-default status of programmable features**

(30) Priority: 15.04.1997 US 838104
(71) Applicant: Xerox Corporation, Rochester, New York 14644 (US)
(72) Inventor: Barrett, Michael W., Fairport, New York 14450 (US); Martin, Andrew T., Webster, New York 14580 (US); Matthews, David S., Rochester, New York 14612 (US); Knodt, Ruediger, Rochester, New York 14618 (US)
(74) Representative: Grünecker, Kinkeldey, Stockmair & Schwanhäusser Anwaltssozietät

(57) **Abstract**

A reprographic system includes a marking system; a scanning system a user interface; and a controller. The user interface displays a first screen having a plurality of activatable areas linked to other screens. The first screen has a plurality of status indication areas. Each status area has an association with one of the plurality of activatable areas to indicate a status of default values associated with the linked screen corresponding to the activatable area.

## Description

### FIELD OF THE PRESENT INVENTION

The present invention is directed to a user interface for a reprographic system. More specifically, the present invention is directed to a user interface which enables the user to determine if all programmable features of the reprographic system are set to default values.

### BACKGROUND OF THE PRESENT INVENTION

A conventional reprographic system is the office copier. Traditionally, the copier, in the office equipment context, refers to a light lens xerographic copier in which paper originals are in fact photographed. The images are focused on an area of a photoreceptor, which is subsequently developed with toner. The developed image on the photoreceptor is then transferred to a copy sheet which in turn is used to create a permanent copy of the original.

In recent years, however, there has been made available what is known as digital copiers. In the most basic functions, a digital copier performs the same functions as a light lens copier, except that the original image to be copied is not directly focused on a photoreceptor. Instead, with a digital copier, the original image is scanned by a device generally known as a raster input scanner (RIS) which is typically in the form of the linear array of small photosensors.

The original image is focused on the photosensors in the RIS. The photosensors convert the various light and dark areas of the original image to a set of digital signals. These digital signals are temporarily retained in a memory and then eventually used to operate a digital printing apparatus when it is desired to print copies of the original. The digital signals may also be sent directly to the printing device without being stored in a memory.

The digital printing apparatus can be any known type of printing system responsive to digital data, such as a modulating scanning laser which discharges image wide portions of a photoreceptor, or an ink jet printhead.

Moreover, with the advent of the digitalization of the office copier, there has also been made available digital multi-function machines. The digital multi-function machine is a single machine which provides a user with more than one function. An example of a typical multi-function machine would include a digital facsimile function, a digital printing function, and a digital copy function.

More specifically, a user can utilize this digital multi-function machine to send a facsimile of an original document to a remote receiving device, to scan in an original image and print copies thereof, and/or to print documents from either a network source, locally connected source, or from a portable memory device which has been inserted into the multi-function machine.

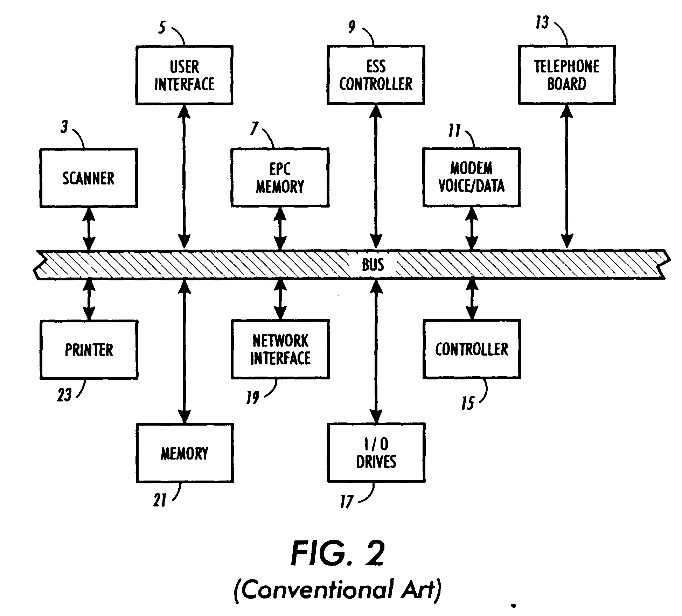

An example of the basic architecture of a digital multi-function machine is illustrated in Figure 2. As illustrated in Figure 2, the architecture of the digital multi-function machine includes a scanner 3 which converts an original image into a set of digital signals that can be either stored or reproduced. The scanner 3 is connected to a central bus system 1 which may be either a single bus or a plurality of buses which provide interconnections and intercommunications between the various modules and devices on a multi-function digital machine.

The digital multi-function machine, as illustrated in Figure 2, further includes a digital printing device 23 which converts digital signals representing an image into a hardcopy of that image on a recording medium whether the recording medium be paper, transparency, or other type of markable medium. The digital multi-function machine also includes a memory 21 for storing a variety of types of digital information such as machine fault information, machine history information, digital images to be processed at a later time, instruction sets for the machine, job instruction sets, etc.

In addition to the memory 21, a typical digital multi-function machine includes an electronic pre-collation memory section 7 which may store the digital representation of the image being presently rendered by the digital printing device 23. In the electronic pre-collation memory 7, the digital image is already laid out in its page structure so that it can be readily rendered by the digital printing device 23.

The digital multi-function machine as illustrated in Figure 2, further includes a user interface 5 which allows the user to select the various functions of the multi-function machine, program various job attributes for the particularly selected function, provide other input to the multi-function machine as well as display informational data from the digital multi-function machine.

If the digital multi-function machine is connected to a network, the digital multi-function machine would include a network interface 19 and an electronic subsystem (ESS) controller 9 which would control the interrelationship between the various modules or devices on the digital multi-function machine and the network.

To enable a facsimile function, the digital multi-function machine would include, typically, a voice/data modem 11 and a telephone circuit board 13. Moreover, the digital multi-function machine may include input/output drives 17 such as a floppy disc drive, a CD ROM drive, a tape drive, or other type of drive which can accept a portable memory device.

In some digital multi-function machines, the machine also includes a finisher 29 which can perform certain operations upon the printed output from the printing device 23. Lastly, the digital multi-function machine includes a controller 15 which controls all the functions within the multi-function device so as to coordinate all the interactions between the various modules and devices.

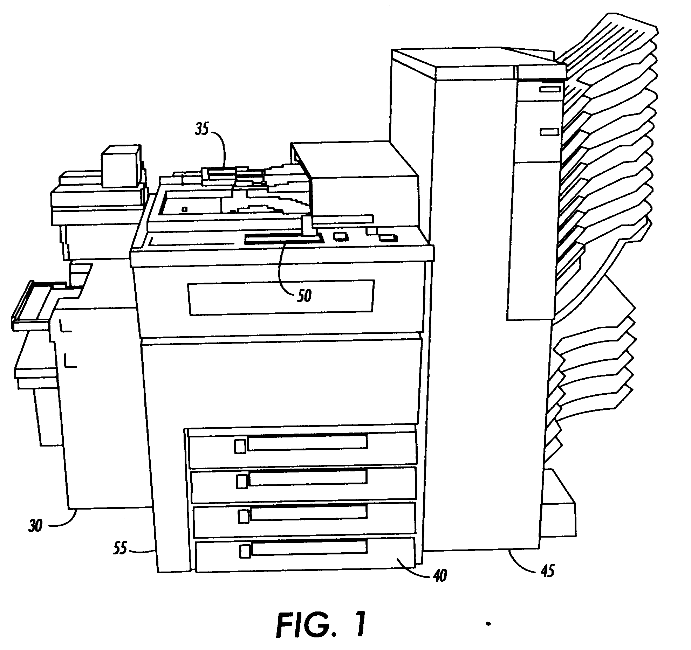

Figure 1 illustrates an overall construction of a digital multi-function machine. The digital multi-function machine, as illustrated in Figure 1, includes a scanning station 35, a printing station 55, and a user interface 50. The digital multi-function machine may also include a finisher device 45 which may be a sorter, tower mailbox, stapler, etc. The printing station 55 may include a plurality of paper trays 40 that store the paper used in the printing process. Lastly, the digital multi-function machine may include a high capacity feeder 30 which is capable of holding large amounts of paper stock to be used by the machine.

In a typical scanning function, the operator would utilize the scanning station 30 to scan in the images from the original documents. This scanning station 30 may be a platen type scanner or may include a constant velocity transport system which moves the original documents across a stationary scanning device. Moreover, the scanning station 30 may also include a document handling system which is capable of placing the original documents, automatically, on the glass platen for scanning.

With respect to the printing functions, the printing station 55 would retrieve the proper paper from one of the multiple paper trays or the high capacity feeder, render the desired image on the retrieved paper, and output the printed image to the finishing device 45 for further operations.

The user interface 50 allows the user to control the various functions of the digital multi-function machine by presenting various types of screens to the user which provides the user an opportunity to program certain job characteristics or function characteristics.

As with the migration of traditional light lens copiers to digital machines, the user-programmable features on a reprographic system have improved and increased. More specifically, the early reprographic systems include only a minimal number of user-programmable features, such as reduction, lighter/darker, and number of copies. As the reprographic machines evolved with technology, the user-programmable features became numerous. This increase in the population in the number of user-programmable features, causes the user interfaces of the reprographic machine to increase in size creating new problems when trying to design a compact machine.

With the advent of reprographic systems having more and more features included for the user to program, different user interfaces have been developed in order to allow the user to program these various features. One such user interface is an interactive electronic display user interface which has multiple levels or multiple screens. The user of such an interface user can navigate through various screens to select the desired user-programmable features or attributes. More specifically, the user may encounter a main copying screen and navigational buttons to get to other screens or layered screens so as to program different features or attributes associated with those navigational buttons.

For example, a main copying screen may have a navigational button associated with the feature of reduction/enlargement. By activating this navigational button, the user interface would display a screen which has a plurality of reduction/enlargement activatable buttons as well as other programmable areas which allow the user to program a variety of reduction/enlargement values.

Although the utilization of such a multi-level or multi-screen system allows the user to program a multitude of features for the copying machine while maintaining a compact user interface, the utilization of multi-screens can also cause problems. For example, if a previous user has navigated through various levels of the screens to program certain features into the reprographic system and then when completing the copy job forgets to clear out those features, a subsequent user coming up to perform a normal copying job without requiring the programming of different features would not know the actual setting of the machine without going through the various multi-layers of screens to determine the actual settings of the various features.

Therefore, it is desirable to have a user interface which utilizes the multiple screens and multiple layers of an interactive electronic display user interface, but which has a main copying screen from which a user can readily determine whether the values associated with the layered screens are set to default values or not. By having such an indication, the user can readily look at the main copying screen and determine whether the user must go down to a certain level to change a setting to a default setting so as to carry out a normal copying operation. In other words, by providing this indication on the main copying screen, the user is assured that all default values are set or certain features or attributes have non-default values associated therewith, thereby enabling the user to change those values to the desired values without navigating through undesirable screens or layers.

### SUMMARY OF THE PRESENT INVENTION

One aspect of the present invention is a method for programming a reprographic system through a user interface. The method displays a first screen having a plurality of activatable areas linked to other screens, the first screen having a plurality of status indication areas, each status area having an association with one of the plurality of activatable areas to indicate a status of default values associated with the linked screen corresponding to the activatable area; determines if one of the plurality of activatable areas has been engaged; displays a second screen associated with the activatable area that has been engaged; determines if a non-default value has been programmed by the user through the second screen; and redisplays the first screen when a non-default value has been programmed by the user through the second screen wherein the status indication area associated with the activatable area linked with the second screen indicates that a value associated with the second screen is a non-default value.

Another aspect of the present invention is a method for displaying through a user interface a status of programmed features for a job to be performed on a reprographic system. The method displays a first screen having a plurality of activatable areas linked to other screens, the first screen having a plurality of status indication areas, each status area having an association with one of the plurality of activatable areas to indicate a status of default values associated with the linked screen corresponding to the activatable area.

A third aspect of the present invention is a reprographic system. The system includes a marking system; a scanning system; a user interface; and a controller. The user interface displays a first screen having a plurality of activatable areas linked to other screens, the first screen having a plurality of status indication areas, each status area having an association with one of the plurality of activatable areas to indicate a status of default values associated with the linked screen corresponding to the activatable area.

Further objects and advantages of the present invention will become apparent from the following description of the various features of the present invention.

### BRIEF DESCRIPTION OF THE DRAWINGS

The following is a brief description of the drawings used to describe the present invention, and thus, these drawings are being presented for illustrative purposes only and thus should not be limitative of the scope of the present invention, wherein:
Figure 1 is a graphic representation of a digital reprographic machine;
Figure 2 is a block diagram illustrating the architecture of a digital reprographic machine;
Figure 3 is a flowchart illustrating a method of indicating the default value status of user-programmable features according to the present invention;
Figure 4 is a flowchart illustrating another method of indicating the default value status of user-programmable features according to the present invention;
Figure 5 is a graphical representation of an example of status indication area according to a preferred embodiment of the present invention; and
Figure 6 is a graphical representation of a user interface screen used for displaying the default value status for various user-programmable features from a main screen.

### DETAILED DESCRIPTION OF THE PRESENT INVENTION

The following is a detailed description of the present invention. In this description, the drawings have been utilized to illustrate the concepts of the present invention. In this description as well as in the drawings, like reference numerals indicate the same items or equivalent items.

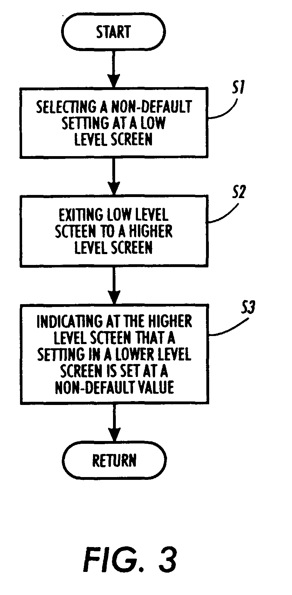

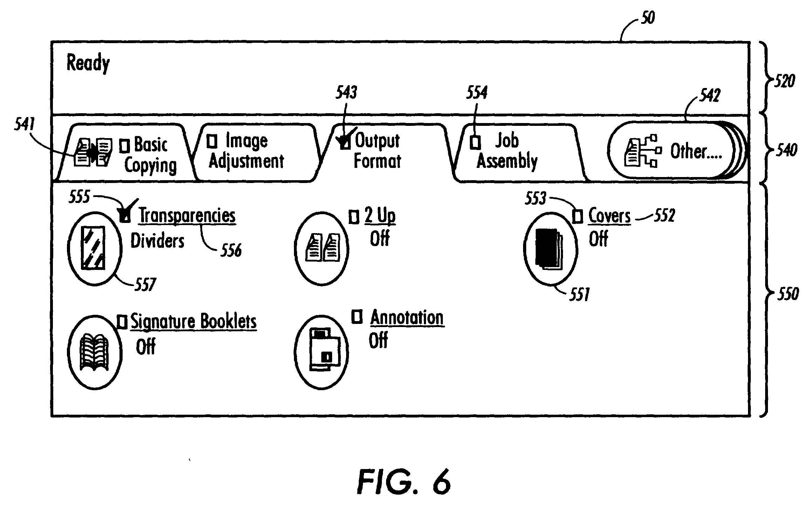

Figure 3 illustrates a flowchart showing a method of indicating whether individual features are assigned to a default value or not according to the concepts of the present invention. As illustrated in Figure 3, at step S1, a user selects a non-default setting at a low level screen. At step S2, the user exits the low level screen to a higher level screen. At step S3, the user interface of the copier provides an indication at the higher level screen that a setting at a lower level screen is set at a non-default value. In the preferred embodiment of the present invention, the user interface is a touch-sensitive video screen. An example of such a higher level screen is illustrated in Figure 6.

As illustrated in Figure 6, a user interface screen 50 includes an information area 520, a navigational area 540, and a programmable area 550. The informational area 520 provides the user with information indicating the machine status, status of various components of the machine, and other information which may assist the user in programming a desired job for the reprographic machine to carry out. In the navigational area 540, the user interface provides a plurality of activatable areas such as tabs 541 and navigational buttons 542. Tabs 541 have a plurality of activatable areas associated therewith. By activating or engaging a tab 541, the user interface brings forward the activatable areas associated with that tab and places the previously displayed tab and activatable areas in the background.

As illustrated in Figure 6, the activatable tab corresponding to output format is in the foreground while the activatable tabs associated with basic copying, image adjustment, and job assembly are in the background of the screen.

Moreover, each activatable tab includes a status indication area wherein the status indication area either indicates that a feature or attribute value associated with that tab has been set to a non-default value as indicated by status indication area 543 or that all the programmable features or attributes associated with that tab are set at the default values as indicated by status indication area 554.

In other words, as illustrated in the example of Figure 6, the various features or attributes associated with the basic copying tab, image adjustment tab, and job assembly tab, are all set to default values since the status indication area is not highlighted or checked. However, as clearly illustrated in Figure 6, the output format tab includes certain features which are not programmed to the default settings which is clearly shown by the highlighted or checked status indication area 543.

Moreover, the programmable area 550 includes a plurality of activatable areas such as 557 and 551 which allows the user to either program in a specific feature or attribute or to navigate to another screen so as to select from a plurality of features or attributes associated with the feature description of the activatable area. For example, the activatable area 557, upon activation, would take the user to another screen so that the user can choose from a plurality of features associated with transparencies. Moreover, activatable area 551, upon engagement by the user, would cause the user interface to display another screen wherein the user would be able to select from a plurality of features associated with covers.

Each activatable area has an idenfifying area 556 and 552 which identifies the function associated with the activatable area. Moreover, each activatable area in the programmable area 550 has a status indication area 555 and 553 which indicates whether the various features or attributes associated with that activatable area which may be linked to another screen are set to default values or not.

More specifically, the status indication area 555 indicates to the user that certain features associated with transparencies have been set to non-default values; whereas status indication area 553 indicates to the user that the features or attributes associated with covers function are all set to the default value.

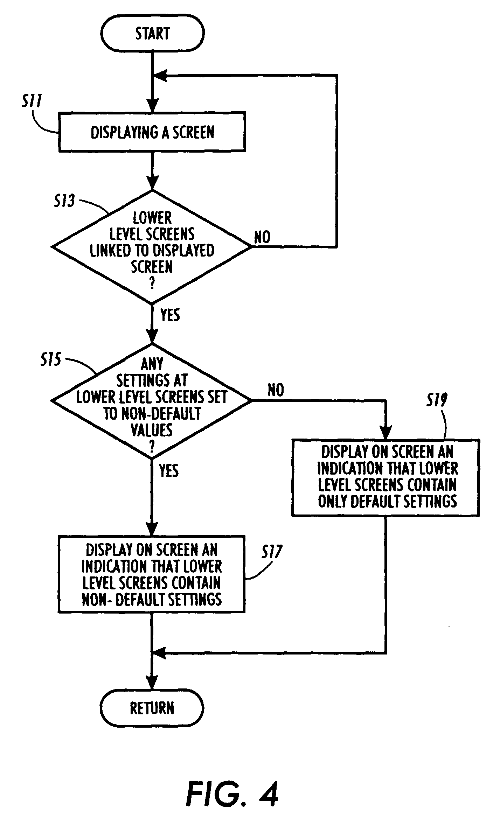

Figure 4 illustrates another flowchart showing a method for indicating to a user the default status of various features which are programmable by a user through a user interface associated with a reprographic system according to the concepts of the present invention. More specifically, as illustrated in Figure 4, at step S11, the user interface displays a screen. At step S13, the reprographic system determines whether there are any lower level screens linked to the displayed screen. If there are lower level screens linked to the displayed screen, step S15 determines whether any settings at the lower level screens are set to non-default values. If any of the settings at the lower level screens which are linked to the displayed screen are set to non-default values, step S17 provides an indication on the displayed screen that the lower level screens contain non-default settings. On the other hand, if the reprographic system determines that none of the settings at the lower level screens are set to non-default values, step S19 causes the user interface to display on the screen an indication that the lower level screens contain only default settings.

In the preferred embodiment of the present invention, this status indication status is positioned adjacent to the activatable areas which the user would engage to get to the lower level screens.

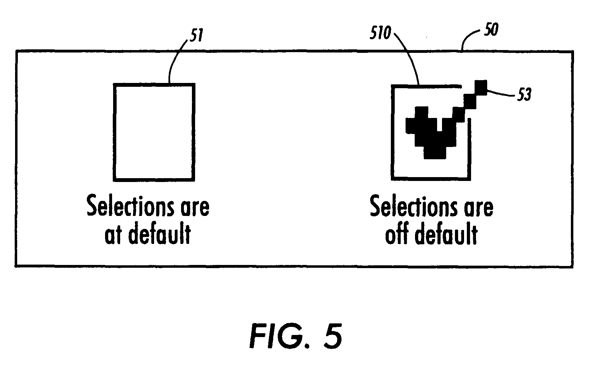

An example of a status indication status area is illustrated in Figure 5. More specifically, as illustrated in Figure 5, if all the selections located at lower level screens associated with the activatable area are set to default values, a status indication area similar to that illustrated by item 51 of Figure 5 would be positioned adjacent to the activatable area associated with the selections. However, if some of the selections associated with the lower screens are set to non-default values, a status indication area similar to item 510 of Figure 5 would be positioned adjacent to the activatable area associated with those lower screens.

In the preferred embodiment of the present invention, the status indication area is a box wherein a checkmark is included in the box to indicate that at least one setting associated with a lower screen is set to a non-default value. However, this indication can also be provided with highlighting, coloring, or any other display scheme which distinguishes between the two states that is readily recognizable by the user.

Also, in a preferred embodiment of the present invention, a main copying screen would include a reset function, a single activatable area, which is linked to all programmable features or attribute so that when engaged, all programmable features or attributes are reset to their default values.

Although the present invention has been described in detail above, various modifications can be made without departing from the spirit of the invention. For example, the above description describes the present invention as a touch-sensitive video screen as the user interface. As an alternative, the user interface can be a video screen which interacts with a point/click device such as a mouse or a video screen which is light sensitive or magnetically sensitive so as to response to a light pen or magnetic pen.

In summary, a user or operator approaching the reprographic system which is displaying a main copy screen will know, without opening any of the other screens or bringing forward any of the background tabs if the features associated with the other screens or background tabs are in the default state. In other words, the present invention enables the user to gain a quick status of the settings of the machine without navigating through a plurality of lower level screens or background positioned screens.

While the present invention has been described with reference to various embodiments as described above, it is not confined to the details set forth above, but is intended to cover such modifications or changes as may come within the scope to the attached claims.

## Claims

1. A method for programming a reprographic system through a user interface, comprising the steps of:
(a) displaying a first screen having a plurality of activatable areas linked to other screens, the first screen having a plurality of status indication areas, each status area having an association with one of the plurality of activatable areas to indicate a status of default values associated with the linked screen corresponding to the activatable area;
(b) determining if one of the plurality of activatable areas has been engaged;
(c) displaying a second screen associated with the activatable area that has been engaged as determined by said step (b);
(d) determining if a non-default value has been programmed by the user through the second screen; and
(e) redisplaying the first screen when said step (d) has made a positive determination, the status indication area associated with the activatable area linked with the second screen indicating that a value associated with the second screen is a non-default value.

2. The method as claimed in claim 1, further comprising the steps of:
(f) re-displaying the second screen when said step (b) has made a positive determination that the associated activatable area has been engaged;
(g) determining if a default value has been programmed by the user through the second screen; and
(h) re-displaying the first screen when said step (g) has made a positive determination, the status indication area associated with the activatable area linked with the second screen indicating that the value associated with the second screen is a default value.

3. The method as claimed in claim 1, further comprising the steps of:
(f) re-displaying the second screen when said step (b) has made a positive determination that the associated activatable area has been engaged;
(g) determining if all possible default values have been programmed by the user through the second screen; and
(h) re-displaying the first screen when said step (g) has made a positive determination, the status indication area associated with the activatable area linked with the second screen indicating that values associated with the second screen are default values.

4. The method as claimed in claim 1, wherein the status indication area is part of the activatable area.

5. A method for displaying through a user interface a status of programmed features for a job to be performed on a reprographic system, comprising the step of:
(a) displaying a first screen having a plurality of activatable areas linked to other screens, the first screen having a plurality of status indication areas, each status area having an association with one of the plurality of activatable areas to indicate a status of default values associated with the linked screen corresponding to the activatable area.

6. The method as claimed in claim 5, wherein the status indication area is highlighted when a value associated with a linked screen is a non-default value.

7. The method as claimed in claim 5, wherein the status indication area is part of the activatable area.

8. A reprographic system, comprising:
a marking system;
a scanning system;
a user interface; and
a controller;
said user interface displaying a first screen having a plurality of activatable areas linked to other screens, the first screen having a plurality of status indication areas, each status area having an association with one of the plurality of activatable areas to indicate a status of default values associated with the linked screen corresponding to the activatable area.

9. The reprographic system as claimed in claim 8, wherein said status indication area is part of said activatable area.

10. The reprographic system as claimed in claim 8, wherein said status indication area is highlighted when a value associated with a linked screen is a non-default value.
